# EUROPÄISCHE PATENTANMELDUNG

(11) **EP 4 202 474 A1**
(43) Veröffentlichungstag der Anmeldung: **28.06.2023**
(21) Anmeldenummer: 21216214.3
(22) Anmeldetag: 21.12.2021
(51) Int. Cl.: G01S 7/40, G01S 7/497, G01S 7/52, G01S 13/931, G01S 15/931, G01S 17/931, G06T 7/80, G01S 7/41

(54) **VERFAHREN UND ANORDNUNG ZUM PARAMETRIEREN EINER EMULATIONSLOGIK**

(71) Anmelder: dSPACE GmbH, 33102 Paderborn (DE)
(72) Erfinder: Sievers, Gregor, 33102 Paderborn (DE); Leßmann, Thomas, 33102 Paderborn (DE); Burdorf, Sven, 33102 Paderborn (DE); Skusa, Andre, 33102 Paderborn (DE); Seiger, Caius, 33102 Paderborn (DE)

(57) **Zusammenfassung**

Die Anmeldung betrifft ein Verfahren zum Parametrieren einer Emulationslogik (EL), welche einen bildgebenden Sensor (BS) emuliert, mit den Schritten:
a) Anfertigen einer Rohdatenaufnahme eines Kalibrierungsobjektes (KO) mittels des bildgebenden Sensors (BS),
b) Messen zumindest eines Betriebsparameters des bildgebenden Sensors (BS) anhand der Rohdatenaufnahme,
c) Parametrieren der Emulationslogik (EL) mit dem zumindest einen Betriebsparameter,
d) Anfertigen einer synthetischen Rohdatenaufnahme eines digitalen Zwillings des Kalibrierungsobjektes (KO) mittels der Emulationslogik (EL),
e) Ermitteln eines Abstandes zwischen der Rohdatenaufnahme und der synthetischen Rohdatenaufnahme,
f) Falls der Abstand ein vorgegebenes Abbruchkriterium nicht erfüllt:
g) Ändern des zumindest einen Betriebsparameters,
h) wiederholtes Durchführen der Schritte c) bis h) mit dem jeweils geänderten zumindest einen Betriebsparameter.

Das Kalibrierungsobjekt (KO) ist als ein Reflektor mit einer definierten Charakteristik ausgebildet, falls der bildgebende Sensor (BS) als ein Radarsensor, ein Lidarsensor oder ein Ultraschallsensor ausgebildet ist. Das Kalibrierungsobjekt (KO) ist als eine Tafel mit einem definierten geometrischen Muster ausgebildet, falls der bildgebende Sensor (BS) als eine Kamera ausgebildet ist, wobei der zumindest eine Betriebsparameter anhand der Geometrie des Musters gemessen wird.

Die Anmeldung betrifft weiter eine Anordnung (10) zum Parametrieren einer Emulationslogik (EL).

## Beschreibung

Die Anmeldung betrifft ein Verfahren und eine Anordnung zum Parametrieren einer Emulationslogik, welche einen bildgebenden Sensor emuliert.

Ein bildgebender Sensor, wie z. B. eine Kamera, ein Lidarsensor, ein Radarsensor oder ein Ultraschallsensor, kann z. B. in Steuersystemen im Automobilbereich, in der Luftfahrt oder in der Robotik Anwendung finden. Bildgebende Sensoren werden auch in autonomen oder teilautonomen Systemen in diesen Bereichen eingesetzt, da solche Systeme, die sich ohne oder teilweise ohne menschlichen Eingriff in der Umgebung bewegen, über bildgebende Sensoren Informationen über ihre Umwelt erhalten können. Z. B. können bei Steuersystemen für autonome Fahrzeuge im Automobilbereich dutzende bildgebender Sensoren wie Kamera, Lidar, Radar oder Ultraschall, eingesetzt werden. Eine Rohdatenausgabe eines bildgebenden Sensors bildet eine erste digitale Schnittstelle mit Bilddaten, der oft ein neuronales Netz, z. B. in Form eines Klassifikators, z. B. als Objekterkennung, nachgeschaltet ist.

Solche Steuersysteme werden bevorzugt in virtuellen Umgebungen, z. B. in Form von HiL (Hardware in the Loop) oder SiL (Software in the Loop), getestet. Die virtuellen Umgebungen können dann mit Emulatoren ausgestattet sein, welche über Sensormodelle bildgebende Sensoren emulieren und synthetische Bilddaten insbesondere synthetische Rohdaten, erzeugen, die in die Steuersysteme eingespeist werden können. Die Sensorsimulation unter Verwendung von Rohdaten wird auch als Sensorsimulation auf Rohdatenebene bezeichnet. Die Sensormodelle der Emulatoren lassen sich mit Betriebsparametern des bildgebenden Sensors parametrieren, um die synthetischen Bilddaten an die Bilddaten des realen bildgebenden Sensors anzupassen. Ohne hinreichend korrekte und genaue Parametrierung des Sensormodells kann es sein, dass die synthetischen Bilddaten nicht gut genug für das Steuersystem sind. In der Folge kann das Steuersystem in einen Fehlermodus gehen, und selbst wenn das nicht geschieht, fehlt es den Testergebnissen wegen des zu geringen Realismus der synthetischen Bilddaten möglicherweise an Aussagekraft.

Der Anmeldung liegt daher die Aufgabe zugrunde, die Parametrierung einer Emulation eines bildgebenden Sensors zu verbessern.

Die Aufgabe wird durch ein Verfahren mit den Merkmalen des Patentanspruchs 1 bzw. durch eine Anordnung mit den Merkmalen des unabhängigen Patentanspruchs 8 gelöst.

Ein Verfahren zum Parametrieren einer Emulationslogik, welche einen bildgebenden Sensor emuliert, weist die folgenden Schritte auf:
a) Anfertigen einer Rohdatenaufnahme eines Kalibrierungsobjektes mittels des bildgebenden Sensors,
b) Messen zumindest eines Betriebsparameters des bildgebenden Sensors anhand der Rohdatenaufnahme,
c) Parametrieren der Emulationslogik mit dem zumindest einen Betriebsparameter,
d) Anfertigen einer synthetischen Rohdatenaufnahme eines digitalen Zwillings des Kalibrierungsobjektes mittels der Emulationslogik,
e) Ermitteln eines Abstandes zwischen der Rohdatenaufnahme und der synthetischen Rohdatenaufnahme,
f) Falls der Abstand ein durch einen vorgebbaren Schwellwert definiertes Abbruchkriterium nicht erfüllt:
g) Ändern des zumindest einen Betriebsparameters,
h) wiederholtes Durchführen der Schritte c) bis h) mit dem jeweils geänderten zumindest einen Betriebsparameter.

Dabei ist das Kalibrierungsobjekt als ein Reflektor mit einer definierten Charakteristik ausgebildet, falls der bildgebende Sensor als ein Radarsensor, ein Lidarsensor oder ein Ultraschallsensor ausgebildet ist. Dabei ist das Kalibrierungsobjekt als eine Tafel mit einem definierten geometrischen Muster ausgebildet, falls der bildgebende Sensor als eine Kamera ausgebildet ist, wobei der zumindest eine Betriebsparameter anhand der Geometrie des Musters gemessen wird. Für andere bildgebende Sensoren können andere Kalibrierungsobjekte vorgesehen sein.

Ein bildgebender Sensor ist ein beliebiger Sensor, der geeignet ist, ein Abbild seiner Umgebung zu erstellen, und kann insbesondere eine Kamera, ein Radarsensor, ein Lidarsensor oder ein Ultraschallsensor sein. Rohdaten sind vom Sensor gelieferte, die Umgebung repräsentierende Daten in unverarbeiteter Form. Sie liegen in digitaler Form vor.

Bei einer Kamera gibt ein sogenanntes Kamera-Frontend die Rohdaten aus. Ein Kamera-Frontend weist den Kamera-Imager, auch Kamera-Chip oder Bildaufnehmer genannt, und die Linse auf. Die Linse dient zur Projektion eines Bildes der Umwelt auf den Kamera-Imager. Der Kamera-Imager ist eingerichtet, das projizierte Bild in digitale Rohdaten zu übersetzen. Das Kamera-Frontend gibt die Rohdaten in digitaler Form aus. Beim Beispiel der Kamera kann dies z. B. eine Fotografie im RAW-Format sein.

Die Emulationslogik ist bevorzugt eine mit einem Algorithmus programmierte Emulation, die z. B. als Software auf einem Prozessor ablaufen kann oder als logischer Schaltkreis auf einer programmierbaren Gatteranordnung, z. B. einem FPGA, ausgebildet sein kann.

Das Kalibrierungsobjekt ist ausgestaltet, anhand der Aufnahme des Kalibrierungsobjektes mit dem bildgebenden Sensor mindestens einen Betriebsparameter des bildgebenden Sensors zu messen. Falls der bildgebende Sensor als ein Radarsensor, ein Lidarsensor oder ein Ultraschallsensor ausgebildet ist, handelt es sich bei dem Kalibrierungsobjekt um einen Reflektor mit einer definierten Charakteristik. Dies kann für Radar oder Ultraschall z. B. ein Tripelspiegel sein. Ein Tripelspiegel weist 3 Spiegelflächen auf, die jeweils im Winkel von 90° zueinander angeordnet sind. Für Lidar kann es sich bei dem Reflektor mit definierter Charakteristik z. B. um eine weiße Kugel handeln.

Falls der bildgebende Sensor als eine Kamera ausgebildet ist, handelt es sich bei dem Kalibrierungsobjekt um eine Tafel mit einem definierten geometrischen Muster, wobei der zumindest eine Betriebsparameter anhand der Geometrie des Musters gemessen wird. Das Muster kann insbesondere ein schwarz-weißes Muster sein. Das Muster kann z. B. als Schachbrettmuster ausgebildet sein. Es sind aber auch andere Muster zum Zwecke der Kalibrierung denkbar, die bevorzugt wohldefiniert sein sollen.

Ein Betriebsparameter eines bildgebenden Sensors ist ein Parameter, mit dem der bildgebende Sensor weiter charakterisiert oder sein Verhalten eingestellt werden kann. Der Betriebsparameter kann z. B. von der konkreten Hardware des Sensors abhängen. In der Regel gibt es mehrere Betriebsparameter eines Sensors, die bei einer Sensoremulation eingestellt werden müssen. Die Mehrzahl von Betriebsparameters kann auch als Satz von Betriebsparametern bezeichnet werden. Über die korrekte und genaue Einstellung von Betriebsparametern ist es möglich, von der Sensoremulation erzeugte synthetische Bilddaten den Bilddaten, die von einem echten Sensor erzeugt werden anzugleichen. Im Falle einer Kamera können Betriebsparameter z. B. Vignettierung, Motion Blurr, Farbdarstellung/Bayer-Pattern, Verzerrung der Linse, chromatische Aberration, erfasster Bildwinkel, Belichtungszeit (z. B. für LED Flickering) sein.

Die Emulationslogik ist ausgebildet, den bildgebenden Sensor zu emulieren, und synthetische Rohdaten zu erzeugen, die die von dem bildgebenden Sensor erzeugten Rohdaten nachbilden sollen. Diese synthetischen Rohdaten können dann z. B. in ein Steuersystem eingespeist werden, um dem Steuersystem die Daten eines echten bildgebenden Sensors vorzuspiegeln. Die Emulationslogik wird mit zumindest einem Betriebsparameter parametriert. Die Emulationslogik weist ebenfalls digitale Daten zu dem Kalibrierungsobjekt auf, auch digitaler Zwilling des Kalibrierungsobjektes genannt. Die Emulationslogik ist eingerichtet, eine synthetische Rohdatenaufnahme eines digitalen Zwillings unter Verwendung des Betriebsparameters anzufertigen. Die synthetische Rohdatenaufnahme des digitalen Zwillings des Kalibrierungsobjekte wird dann mit der Rohdatenaufnahme des echten Kalibrierungsobjektes, das mit dem bildgebenden Sensor angefertigt wurde, verglichen.

Überschreitet der ermittelte Abstand einen vorgebbaren Schwellwert, so wird der zumindest eine Betriebsparameter so lange mittels eines automatischen Optimierungsalgorithmus variiert, bis der Abstand das Abbruchkriterium erfüllt. Das Abbruchkriterium ist vorzugsweise derart gewählt, dass bei Erfüllung des Abbruchkriteriums der Abstand einen akzeptabel geringen Wert erreicht oder unterschritten hat und/oder keine signifikante Verringerung des Abstands durch eine weitere Durchführung der Schritte c) bis h) zu erwarten ist. Das Abbruchkriterium kann insbesondere dadurch gegeben sein, dass der Abstand einen vorgegebenen Schwellwert unterschreitet oder dass dass die Verringerung des Abstands gegenüber einem in einem vorhergehenden Iterationsschritt ermittelten Abstand einen vorgegebenen Schwellwert unterschreitet. Der Algorithmus läuft iterativ gemäß der Schritte c) bis h) ab. Dabei werden bei Bedarf wiederholt mit jeweils variiertem Betriebsparameter synthetische Rohdatenaufnahmen des digitalen Zwillings des Kalibrierungsobjektes angefertigt und mit der Rohdatenaufnahme des Kalibrierungsobjektes, das mit dem realen bildgebenden Sensor angefertigt wurde, verglichen. Durch den vorgebbaren Schwellwert ist es möglich, die Güte der Annäherung der synthetischen Bilddaten an die realen Bilddaten einzustellen. Hierdurch kann die Qualität der Emulation des bildgebenden Sensors eingestellt und beeinflusst werden.

In einer Ausführungsform des Verfahrens werden die Schritte a) bis h) für einen oder mehrere, insbesondere jeden, Betriebsparameter aus einem mindestens zwei Betriebsparameter umfassenden Satz von Betriebsparametern durchgeführt. Dabei kann zunächst ein Betriebsparameter variiert werden, bis der ihm zugeordnete Abstand unter dem vorgebbaren Schwellwert liegt und darauffolgend kann das Verfahren für weitere Betriebsparameter durchgeführt werden, bis sie jeweils unter ihren zugeordneten vorgebbaren Schwellwerten liegen. Durch das Einbeziehen mehrerer Betriebsparameter kann der Suchraum für die beste Parametrierung der Emulationslogik weiter vergrößert werden und damit die Qualität der Emulation weiter verbessert werden.

In einer Ausführungsform des Verfahrens wird mittels des Vergleichs ein Abstand zwischen der Rohdatenaufnahme und der synthetischen Rohdatenaufnahme ermittelt. Dieser Abstand wird in einer Abstandsmetrik, vorzugsweise in dem die Rohdatenaufnahme und die synthetische Rohdatenaufnahme als Elemente enthaltenden Bildraum, angegeben. Dabei kann ein Abstand von Null bedeuten, dass die Rohdatenaufnahme und die synthetische Rohdatenaufnahme identisch sind.

Vorteilhaft ist, dass durch den Vergleich der Bilddatenaufnahmen mittels der Abstandsmetriken auch für das menschliche Auge nicht einfach oder gar nicht wahrnehmbare Unterschiede einbezogen werden können. Dadurch kann die Qualität der Emulation weiter verbessert werden. Hierfür können verschiedene Methoden herangezogen werden. Diese reichen vom einfachen Durchschnitt der quadratischen Differenz, z. B. aller Pixelfarbwerte, (Mean Squared Error, MSE) bis hin zu Verfahren, die die Verteilung der Bildpunkte berücksichtigen und dabei die menschliche Wahrnehmung (Human Vision System, HVS) nachahmen (Structural Similarity, SSIM). Es können Verfahren verwendet werden, um Unterschiede in den Veränderungen eines Bildes zu finden, beispielsweise um Störungen oder Bildrauschen zu identifizieren. Ein Beispiel für ein solches Standardverfahren ist das auf den MSE aufbauende Signal-Rausch-Verhältnis (Peak Signal-to-noise ratio, PSNR). Aufgrund der Verwendung von Kalibrierungsobjekten und der gleichartigen Struktur der zu vergleichenden Bilder bieten sich solche Methoden an. Eine weiterführende Alternative sind Metriken, die auf der Auswertung interner Eigenschaften tiefer neuronaler Netze beruhen (Deep Neural Network, DNN). Die Grundannahme bei solchen Verfahren ist, dass aufgrund der vortrainierten Objekterkennung die "Reaktion" des Netzes bei ähnlichen Bildern auch ein ähnliches Verhalten zeigen sollte. Basierend auf dieser Annahme sind unterschiedliche Vorgehensweisen denkbar, die sich im Wesentlichen durch die Repräsentation eines Bildes in den jeweiligen Netzwerkarchitekturen und deren Auswertung unterscheiden.

In einer Ausführungsform des Verfahrens erfolgt das Ändern des zumindest einen Betriebsparameters anhand eines Optimierungsalgorithmus, welcher insbesondere ein auf nichtdifferenzierbare Probleme anwendbarer Algorithmus ist. Dies bietet den Vorteil, dass das Verfahren auch angewendet werden kann, wenn der Abstand der Rohdatenaufnahmen zu den synthetischen Rohdatenaufnahmen nicht durch eine differenzierbare Funktion beschrieben werden kann. In der Regel trifft dies auf den ermittelten Abstand zu, so dass Minimierungsverfahren, die auf der Ermittlung eines Gradienten beruhen in der Regel nicht anwendbar sind. Ein Beispiel für einen solchen Optimierungsalgorithmus, der auf ein nichtdifferenzierbares Problem anwendbar ist, ist ein evolutionärer Algorithmus, insbesondere ein genetischer Algorithmus. Hier bedeutet ein geringer Abstand eine hohe Fitness eines Satzes Betriebsparameter. Hierdurch kann ein zu lösendes Optimierungsproblem aus der Klasse der nicht-differenzierbaren Probleme gelöst werden. Bei einem nicht-differenzierbaren Problem kann nicht auf einfache, mathematisch ableitbare Art und Weise vom Ergebnis der Parametrierung der Simulation auf die Parameter selbst geschlossen werden. Zur Lösung solcher Probleme sind die genannten Algorithmen paradigmatische Vorgehensweisen.

In einer Ausführungsform des Verfahrens werden weitere Rohdatenaufnahmen des Kalibrierungsobjektes mittels des bildgebenden Sensors angefertigt, wobei die weiteren Rohdatenaufnahmen für jeweils unterschiedliche räumliche Positionen des bildgebenden Sensors zum Kalibrierungsobjekt angefertigt werden und die Schritte b) bis h) jeweils für die weiteren Rohdatenaufnahmen durchlaufen werden. Den weiteren Positionen des Kalibrierungsobjektes kann der gleiche Betriebsparameter zugeordnet sein und/oder es können den weiteren Positionen weitere Betriebsparameter zugeordnet sein.

In einer Ausführungsform des Verfahrens wird eine weitere Rohdatenaufnahme eines weiteren Kalibrierungsobjektes mittels des bildgebenden Sensors angefertigt, wobei die Schritte c) bis h) für die weitere Rohdatenaufnahme durchlaufen werden. Hierbei kann dem weiteren Kalibrierungsobjekt der gleiche Betriebsparameter zugeordnet sein und/oder es können dem weiteren Kalibrierungsobjekt weitere Betriebsparameter zugeordnet sein.

Eine Anordnung zum Parametrieren einer Emulationslogik, welche einen bildgebenden Sensor emuliert, weist einen Prozessor und eine Emulationslogik auf. Die Anordnung ist ausgebildet und eingerichtet, das zuvor beschriebene Verfahren auszuführen.

Der Prozessor ist ausgebildet und eingerichtet:
a) eine mittels des bildgebenden Sensors angefertigte Rohdatenaufnahme eines Kalibrierungsobjektes zu empfangen,
b) zumindest einen Betriebsparameter des bildgebenden Sensors anhand der Rohdatenaufnahme zu messen, und
c) eine Emulationslogik mit dem zumindest einen Betriebsparameter zu parametrieren.

Die Emulationslogik ist ausgebildet und eingerichtet:
d) eine synthetische Rohdatenaufnahme eines digitalen Zwillings des Kalibrierungsobjektes anzufertigen.

Der Prozessor ist weiter eingerichtet:
e) einen Abstand zwischen der Rohdatenaufnahme und der synthetischen Rohdatenaufnahme zu ermitteln.

Die Anordnung ist ausgebildet und eingerichtet:
f) falls der Abstand, einen vorgebbaren Schwellwert überschreitet:
g) den zumindest einen Betriebsparameter zu ändern und
h) die Schritte c) bis h) mit dem geänderten zumindest einen Betriebsparameter wiederholt durchzuführen.

Das Kalibrierungsobjekt ist als ein Reflektor mit einer definierten Charakteristik ausgebildet, falls der bildgebende Sensor als ein Radarsensor, ein Lidarsensor oder ein Ultraschallsensor ausgebildet ist. Das Kalibrierungsobjekt ist als eine Tafel mit einem definierten geometrischen Muster ausgebildet, falls der bildgebende Sensor als eine Kamera ausgebildet ist, wobei der zumindest eine Betriebsparameter anhand der Geometrie des Musters gemessen wird. Für andere bildgebende Sensoren sind andere Kalibrierungsobjekte denkbar.

In einer Ausführungsform der Anordnung weist die Emulationslogik Hardware auf, welche insbesondere als programmierbare Gatteranordnung ausgebildet ist. In einer Ausführungsform der Anordnung weist die Emulationslogik Software auf, die insbesondere auf dem Prozessor oder auf einem weiteren Prozessor ausgeführt wird.

Ein Aufbau zum Parametrieren einer Emulationslogik, welche einen bildgebenden Sensor emuliert, weist einen bildgebenden Sensor, ein Kalibrierungsobjekt und die zuvor beschriebene Anordnung zum Parametrieren der Emulationslogik auf.

Die gemäß des zuvor beschriebenen Verfahrens parametrierte Emulationslogik, welche einen bildgebenden Sensor emuliert, kann vorteilhaft in einem Prüfaufbau eines Steuersystems zur Ansteuerung eines Roboters und/oder eines autonomen oder zumindest teilautonomen Fahrzeuges verwendet werden. In dem Prüfaufbau ist vorgesehen, von der Emulationslogik angefertigte synthetische Rohdaten in das Steuersystem einzuspeisen. In dem Prüfaufbau kann für Steuersystem dann eine virtuelle Umgebung emuliert werden, in der das Steuersystem getestet werden kann. Z. B. kann das Steuersystem gezielt mit verschiedenen Situationen konfrontiert werden und sein Verhalten in diesen Situationen getestet werden. Durch eine Emulationslogik, die synthetische Rohdaten produziert, die den echten Rohdaten durch korrekte und genaue Parametrierung sehr nahe kommen, kann der Einsatzbereich des Prüfaufbaus erweitert werden.

Synthetische Rohdaten, die durch die zuvor beschriebene Emulationslogik, welche einen bildgebenden Sensor emuliert, erzeugt worden sind, können zum Trainieren eines neuronalen Netzes, insbesondere eines Klassifikators, verwendet werden. Das neuronale Netz kann insbesondere zur Integration in ein Steuersystem (ECU) zur Ansteuerung eines Roboters und/oder eines zumindest teilautonomen Fahrzeuges vorgesehen sein. Damit kann die Emulationslogik genutzt werden, synthetische Trainingsdaten zu erzeugen, um ein solches neuronales Netz, z. B. zur Erkennung von Fußgängern, Verkehrsschildern, Fahrzeugen und anderem damit zu trainieren.

Im Folgenden wird die Anmeldung anhand von in den Figuren dargestellten Ausführungsbeispielen weiter erläutert und beschrieben.
Fig. 1 zeigt schematisch ein Verfahren zum Parametrieren einer Emulationslogik, welche einen bildgebenden Sensor emuliert,
Fig. 2 zeigt beispielhaft einen Aufbau zum Parametrieren einer Emulationslogik, , welche einen bildgebenden Sensor emuliert,
Fig. 3 zeigt schematisch einen Aufbau zum Parametrieren der Emulationslogik, und
Fig. 4 zeigt schematisch einen Prüfaufbau mit Steuersystem und Emulationslogik.

In den Figuren sind gleiche oder ähnliche Elemente mit den gleichen Bezugszeichen bezeichnet.

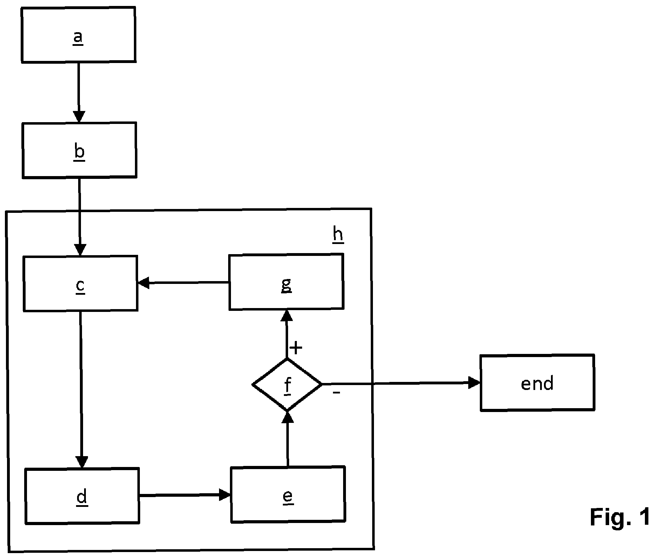

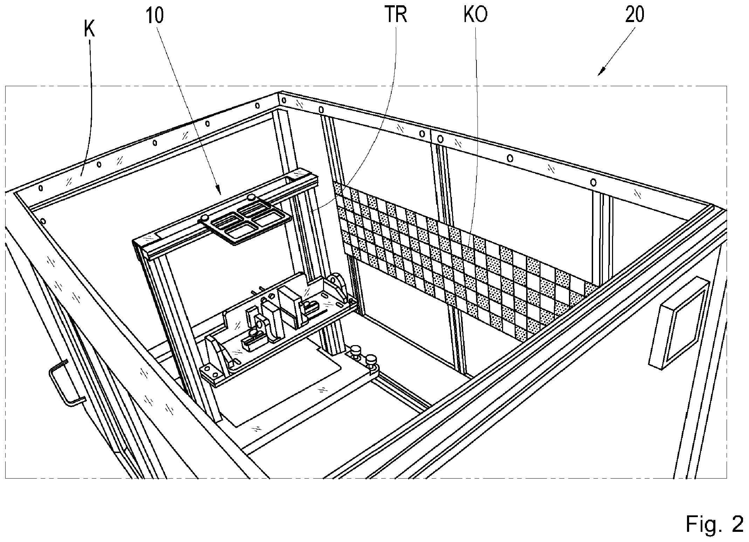

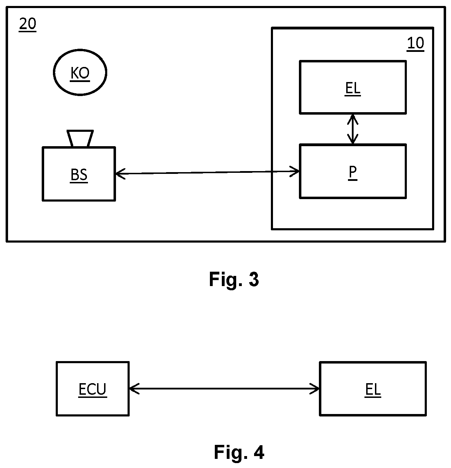

Fig. 1 zeigt schematisch ein Verfahren zum Parametrieren einer Emulationslogik EL (Fig. 3), welche einen bildgebenden Sensor BS (Fig. 2, 3) emuliert.

In Schritt a) wird eine Rohdatenaufnahme eines Kalibrierungsobjektes KO (Fig. 2, 3) mittels des bildgebenden Sensors BS angefertigt. In Schritt b) wird zumindest ein Betriebsparameters des bildgebenden Sensors BS anhand der Rohdatenaufnahme gemessen und in Schritt c) wird die Emulationslogik EL mit dem zumindest einen Betriebsparameter parametriert.

In Schritt d) wird durch die Emulationslogik EL eine synthetische Rohdatenaufnahme eines digitalen Zwillings des Kalibrierungsobjektes KO angefertigt und in Schritt e) ein Abstand zwischen der Rohdatenaufnahme und der synthetischen Rohdatenaufnahme ermittelt.

In Schritt f) wird der Abstand überprüft und falls der Abstand ein Abbruchkriterium erfüllt (Zweig "-"), das Verfahren in Schritt "end" beendet. Hat der erste Verfahrensschritt also bereits eine genügend geringe Distanz beim ersten Bildvergleich erzeugt, kann das Verfahren an dieser Stelle beendet werden.

Falls in Schritt f) ermittelt wird, dass der Abstand das Abbruchkriterium nicht erfüllt (Zweig "+"), wird in Schritt g) der zumindest eine Betriebsparameter geändert und in Schritt h) werden die Schritte c) bis h) mit dem jeweils geänderten zumindest einen Betriebsparameter wiederholt erneut durchgeführt.

Schritt e) entspricht einem Evaluierungsschritt, in dem der Abstand zwischen der Rohdatenaufnahme und der synthetischen Rohdatenaufnahme ermittelt wird. Für die Abstandsermittlung werden Bilddistanzmetriken verwendet. Ist die Bildähnlichkeit nicht ausreichend und sind in den unmittelbar vorhergehenden Iterationen noch signifikante Verbesserungen der Bildähnlichkeit aufgetreten, (Schritt f)), so wird in Schritt g) der Betriebsparameter verändert, und in Schritt h) werden die Schritte c) bis h) mit dem jeweils geänderten Betriebsparameter erneut durchgeführt.

Dies entspricht einer Entwurfsraumexploration in der virtuellen Welt mit der Emulation des bildgebenden Sensors BS, bei der jeweils die Ausgaben der Emulation des bildgebenden Sensors BS mit den in Schritt a) ermittelten Referenz-Daten verglichen werden.

Für das Verändern des zumindest einen Betriebsparameters können verschiedene Methoden zur Optimierung zur Anwendung kommen. Falls ein physikalisches Modell des bildgebenden Sensors BS existiert und die Bewertungsfunktion für den Abstand differenzierbar in Bezug auf die Betriebsparameter ist, eignen sich gradientenbasierte Verfahren. Existiert kein physikalisches Modell oder kann die Bewertungsfunktion nicht in Bezug zu den zu optimierenden Parametern differenziert werden, müssen gradientenfreie Verfahren, wie beispielsweise das Nelder-Mead-Verfahren oder evolutionäre Algorithmen verwendet werden.

Mittels eines solchen Optimierungsverfahrens und einem vorher festgelegten Schwellwert, welcher als Distanz- oder Qualitätskriterium dient, kann somit ein Parametersatz ermittelt werden, um die Emulationslogik EL so zu parametrieren, dass sie synthetische Bilddaten der erforderlichen Güte erzeugen kann.

Optional können mehrere betrachtete Parameter über das iterative Optimierungsverfahren gleichzeitig so angepasst werden, dass sich das synthetische Bild messbar der durch den bildgebenden Sensor angefertigten Aufnahme annähert. Dazu werden in jedem Optimierungsschritt ein oder mehrere Parameterwerte verändert, die zugehörigen synthetischen Bilddaten erzeugt. Diese werden mittels der Distanzmetrik mit der realen Aufnahme verglichen und abhängig vom Ergebnis weiter optimiert oder das Verfahren beendet.

Die genaue Ausgestaltung der Optimierungsschleife kann unterschiedlich ausgebildet sein und von einfachen, gerichteten Parametersuchen (greedy Algorithmen) bis hin zu komplexeren Verfahren gehen, die die zu untersuchenden nächsten Parameter mithilfe einer am biologischen Vorbild der Evolution orientierten Vorgehensweise erzeugen (Evolutionäre Algorithmen).

Fig. 2 zeigt einen Aufbau 20 zum Parametrieren der Emulationslogik EL, welche den bildgebenden Sensor BS emuliert. Der Aufbau 20 weist eine Kalibrierungskammer K für den bildgebenden Sensor BS, insbesondere für eine Kamera, mit einem Träger TR zur Aufnahme des bildgebenden Sensors BS und mit einem Kalibrierungsobjekt KO auf. Auf dem Träger ist ein bildgebender Sensor BS, z. B. eine Kamera, montierbar, deren Bilderzeugung virtuell nachgestellt werden soll. Das Kalibrierungsobjekt ist z. B. wie in Fig. 2 dargestellt an einer Wand der Kalibrierungskammer K angeordnet. Auf dem Träger TR kann optional eine Anordnung 10 zum Parametrieren der Emulationslogik EL angeordnet sein.

Mit dem Aufbau 20 kann z. B. Schritt a) des zuvor in Verbindung mit Fig. 1 beschriebenen Verfahrens ausgeführt werden. Mittels des bildgebenden Sensors BS, bspw. einer Kamera, kann eine Rohdatenaufnahme eines Kalibrierungsobjektes KO angefertigt werden. Diese Rohdatenaufnahme kann als Referenz des realen bildgebenden Sensors BS dienen. Der Aufbau hat den Vorteil, dass solche Referenz-Datenaufnahmen reproduzierbar nachgestellt werden können. Das Kalibrierungsobjekt KO ist im dargestellten Beispiel als Schachbrettmuster in schwarzweiß ausgebildet. Das Kalibrierungsobjekt KO kann auch anders ausgebildet sein, z. B. als reguläre oder irreguläre Punktmuster, gewinkelte Schachbrettmuster oder allgemein als eine Tafel mit einem definierten geometrischen Muster, wobei der zumindest eine Betriebsparameter anhand der Geometrie des Musters gemessen werden kann. Das Muster dient damit als Referenz für die Ausmessung der Betriebsparameter der Kameralinse bzw. der Erstellung eines parametrierbaren Linsenprofils. Bei anderen bildgebenden Sensoren, z. B. Radar, Lidar, Ultraschall, kann das Kalibrierungsobjekt KO als ein Reflektor mit einer definierten Charakteristik ausgebildet sein, anhand derer der zumindest eine Betriebsparameter gemessen werden kann.

Der bildgebende Sensor kann auf dem auf Schienen verschiebbaren Träger TR angeordnet werden, so dass mit ihm Aufnahmen des Kalibrierungsobjektes KO in verschiedenen Positionen zueinander angefertigt werden können. Auf diese Weise können mehrere Referenz-Datenaufnahmen angefertigt werden. Alternativ zur Montage des bildgebenden Sensors auf dem verschiebbaren Träger kann der bildgebende Sensor auch fest montiert sein und das Kalibrierungsobjekt verschiebbar sein.

Die Anordnung 10 zum Parametrieren der Emulationslogik EL kann optional auf dem Träger TR angeordnet sein. Es ist auch möglich, die Anordnung 10 zum Parametrieren der Emulationslogik EL entfernt von dem Träger TR anzuordnen und die von dem bildgebenden Sensor BS angefertigten Rohdatenaufnahmen an die Anordnung 10 zu übermitteln. Dies kann z. B. drahtlos oder drahtgebunden erfolgen.

Die Möglichkeit, den bildgebenden Sensor BS auf dem Träger TR anzuordnen, ermöglicht ein automatisiertes Erfassen von verschiedenen Rohdatenaufnahmen als Referenz und darauffolgend das Messen der Betriebsparameter des bildgebenden Sensors BS anhand der verschiedenen Rohdatenaufnahmen (Schritt b) von Fig. 1). Im dargestellten Beispiel kann aus den aufgenommenen Bildern die Kamera z. B. bezüglich der Betriebsparameter der Linse wie Brennweite, Koordination des optischen Zentrums und/oder Verzeichnungskoeffizienten etc. parametriert werden. Dies kann mit Standardalgorithmen erfolgen.

Optional kann sich - für den Fall einer Kamera als bildgebender Sensor BS - an das Messen der Betriebsparameter mittels des schwarz-weißen Musters, insbesondere des Schachbrettmusters, ein Messen von Betriebsparametern mittels einer Farbtafel mit nebeneinander angeordneten Quadraten unterschiedlicher Farbe (Farbfelder) anschließen. Bevorzugt erfolgt das Aufnehmen der Farbtafel mit der Kamera BS ein- oder mehrmals unter definierten Lichtbedingungen. Alternativ können auch monochromatische LEDs verschiedener bekannter Wellenlänge, die als Farbfelder hinter einer Mattscheibe positioniert werden, mit der Kamera BS aufgenommen werden. Durch die zuvor durchgeführte Ermittlung der Betriebsparameter der Kamera BS, ist bekannt, welche Farbfelder auf welche Pixel abgebildet werden. Insbesondere ist man hier an den Rohdaten interessiert ist, also an den Einzelantworten der jeweiligen Pixel in der Bayer-Matrix auf verschiedene Farbstimuli. Die Farbfelder werden in unterschiedlichen Positionen fotografiert, so dass auf jeden Pixel unterschiedliche Farbfelder abgebildet werden. Aus der Antwort des Pixels auf die unterschiedlichen Farbstimuli, kann in einem ersten Schritt auf die Art des Farbfilters vor dem Pixel geschlossen werden (Rot-, Grün-, Blau-Filter, kein Filter etc). Werden genügend unterschiedliche Farben auf den einzelnen Pixel abgebildet, kann die spektrale Antwort des Pixels über Stützstellen approximiert werden. Da in diesem Fall die Anzahl der Parameter in der Simulation gleich der Anzahl der Stützstellen ist und dies für die weitere Verarbeitung schnell nicht mehr handhabbar wird, kann die spektrale Antwort durch ein Mischungsmodell (Linearkombination) aus Basisfunktionen mit begrenzter Anzahl der Parameter approximiert werden. Es ist durchaus möglich, dass die Pixel nichtlinear auf die eintreffende Lichtstärke antworten. Um diesen Fall abzudecken, wiederholt man das Verfahren bevorzugt unter verschiedenen Beleuchtungsbedingungen, um diese Nichtlinearitäten vermessen zu können. Um Verfälschungen durch Vignettierungseffekte zu vermeiden, beschränkt man sich hierbei bevorzugt auf die mittigen Pixel beschränkt. Zur Bestimmung des Betriebsparameters der Vignettierung des Bildes kann eine gleichmäßig ausgeleuchtete Fläche mit der Kamera aufgenommen werden. Die Abschattung des Pixelarrays zu den Rändern hin, wird vermessen und durch eine Funktion parametrisiert. Dies kann beispielsweise eine zweidimensionale Gaußfunktion sein.

Fig. 3 zeigt schematisch den Aufbau 20 mit der Anordnung 10 zum Parametrieren der Emulationslogik EL. Die Anordnung 10 weist einen Prozessor P und die Emulationslogik EL auf und ist ausgebildet und eingerichtet, Schritte des in Verbindung mit Fig. 1 beschriebenen Verfahren auszuführen.

Der Prozessor P ist eingerichtet, die in Schritt a) durch den bildgebenden Sensor BS angefertigte Rohdatenaufnahme des Kalibrierungsobjektes KO zu empfangen, und in Schritt b) Betriebsparameter des bildgebenden Sensors BS anhand der Rohdatenaufnahme zu messen. Diese Schritte a) und b) zur ersten Bestimmung von Betriebsparametern können z. B. mittels des Aufbaus aus Fig. 2 automatisiert ausgeführt werden.

In weiteren Schritten werden die so ermittelten Parameter durch Vergleich mit Simulationsdaten evaluiert. Hierfür ist der Prozessor P eingerichtet, in Schritt c) die Emulationslogik EL mit den gemessenen Betriebsparametern zu parametrieren. Die Emulationslogik wird dazu initial auf die Parameter eingestellt, die in Schritt a) für die reale Kamera ermittelt wurden. Diese Betriebsparameter dienen als Startpunkt oder auch "Seed" für das weitere Vorgehen.

Vorteilhaft ist nun ein Simulationsszenario, das mittels eines emulierten bildgebenden Sensors BS die synthetische Erzeugung der gleichen Kalibrierungsobjekte KO ermöglicht, wie sie mit dem realen bildgebenden Sensor im Aufbau von Fig. 2 aufgenommen wurden. Hierfür wird in Schritt d) die Umgebung des bildgebenden Sensors BS durch Prozessor P als virtuelle Umgebung mit einem digitalen Zwilling des Kalibrierungsobjektes KO nachgebaut und es wird eine synthetische Rohdatenaufnahme des digitalen Zwillings des Kalibrierungsobjektes KO durch die im Schritt c) parametrierte Emulationslogik EL erzeugt. Zur Erstellung der virtuellen Umgebung können einige Informationen des realen Aufbaus 20 aus Fig. 2 verwendet werden, wie z. B. die Pose der Kamera in Fig. 2.

Schritt e) entspricht einem Evaluierungsschritt, in dem der Abstand zwischen der Rohdatenaufnahme und der synthetischen Rohdatenaufnahme ermittelt wird. In diesem Schritt wird die Güte des ermittelten Parametersatzes über den Vergleich der aufgenommenen Bilddaten des realen bildgebenden Sensors zu einem synthetischen, aus der Emulation erzeugten Bild ermittelt. Eine Auswahl geeigneter Bilddistanzmetriken erlaubt, einen quantitativen Abstand zwischen beiden Bildern zu berechnen und diesen zu minimieren.

Dazu kann durch den Schwellwert ein Toleranzrahmen vorgegeben werden, innerhalb dessen sich der Distanzwert sich mindestens befinden sollte. Eine Verringerung der Distanz auf genau 0 wird, obwohl es sich um ein einfaches Testbild in einer artifiziellen Umgebung handelt, praktisch kaum zu erreichen sein, da beispielsweise die Ausrichtung der Kamera auf das Bild nicht so exakt sein kann, dass sich dadurch im Vergleich keine Verschiebungen ergeben und dadurch, je nach gewählter Metrik, Unterschiede in den Distanzwerten ergeben. Deshalb ist eine Wahl des Schwellwertes größer Null vorteilhaft.

Abhängig vom Evaluationsergebnis können diese Parameter durch ein iteratives Optimierungsverfahren weiter an realen Betriebsparameter angenähert werden. Ist die Bildähnlichkeit nicht ausreichend (Schritt f)), so wird in Schritt g) der Betriebsparameter verändert und in Schritt h) die Schritte c) bis h) mit dem jeweils geänderten Betriebsparameter erneut durchgeführt.

Dies entspricht einer Entwurfsraumexploration in der virtuellen Welt mit der Emulation des bildgebenden Sensors BS, bei der jeweils die Ausgaben der Emulation des bildgebenden Sensors BS mit den in Schritt a) ermittelten Referenz-Daten verglichen werden.

Fig. 4 zeigt ein noch in der Entwicklung befindliches Steuersystem ECU mit einer für das Steuersystem vorgesehenen Emulationslogik EL, die einen bildgebenden Sensor, insbesondere eine Kamera, emuliert. Die Emulationslogik EL speist Bilddaten als synthetische Rohdaten in das Steuersystem ECU ein. Die Emulationslogik EL stellt damit dem Steuersystem ECU eine virtuelle Umwelt bereit, anhand derer das Steuersystem ECU erprobt werden kann.

Das Steuersystem ECU liest die synthetischen Rohdaten ein und verarbeitet sie z. B. in einer Objekterkennung mittels eines neuronalen Netzes weiter. Das Steuersystem ECU ist weiter eingerichtet, in Abhängigkeit von der Objekterkennung Aktoren anzusteuern. Über eine solches Steuersystem ECU kann z. B. autonomes Fahren oder teilautonomes Fahren von Fahrzeugen realisiert werden.

Von der Emulationslogik EL generierte synthetische Rohdaten können auch zum Trainieren des neuronalen Netzes zur Objekterkennung verwendet werden. Durch genaues und korrektes Parametrieren der Emulationslogik EL wird diese in die Lage versetzt, synthetische Bilddaten zu produzieren, die realen Bilddaten sehr nahe kommen und deshalb für das Trainieren des neuronalen Netzes eingesetzt werden können.

Statt in ein reales Steuersystems ECU kann die Emulationslogik EL auch von ihr generierte synthetische Bilddaten in ein virtuelles Steuersystem in einem Software-in-the-Loop (SiL) Aufbau einspeisen.

### Bezugszeichenliste

- 10: Anordnung zum Parametrieren
- 20: Aufbau zum Parametrieren
- BS: bildgebender Sensor
- EL: Emulationslogik
- KO: Kalibrierungsobjekt
- P: Prozessor
- ECU: Steuersystem
- TR: Träger
- K: Kalibrierungskammer
- a, b, c, d, e, f, g, h: Verfahrensschritte

## Patentansprüche

1. Verfahren zum Parametrieren einer Emulationslogik (EL), welche einen bildgebenden Sensor (BS) emuliert, mit den Schritten:
a) Anfertigen einer Rohdatenaufnahme eines Kalibrierungsobjektes (KO) mittels des bildgebenden Sensors (BS),
b) Messen zumindest eines Betriebsparameters des bildgebenden Sensors (BS) anhand der Rohdatenaufnahme,
c) Parametrieren der Emulationslogik (EL) mit dem zumindest einen Betriebsparameter,
d) Anfertigen einer synthetischen Rohdatenaufnahme eines digitalen Zwillings des Kalibrierungsobjektes (KO) mittels der Emulationslogik (EL),
e) Ermitteln eines Abstandes zwischen der Rohdatenaufnahme und der synthetischen Rohdatenaufnahme,
f) Falls der Abstand ein durch einen vorgebbaren Schwellwert definiertes Abbruchkriterium nicht erfüllt:
g) Ändern des zumindest einen Betriebsparameters,
h) wiederholtes Durchführen der Schritte c) bis h) mit dem jeweils geänderten zumindest einen Betriebsparameter,
wobei das Kalibrierungsobjekt (KO) als ein Reflektor mit einer definierten Charakteristik ausgebildet ist, falls der bildgebende Sensor (BS) als ein Radarsensor, ein Lidarsensor oder ein Ultraschallsensor ausgebildet ist oder
wobei das Kalibrierungsobjekt (KO) als eine Tafel mit einem definierten geometrischen Muster ausgebildet ist, falls der bildgebende Sensor (BS) als eine Kamera ausgebildet ist, wobei der zumindest eine Betriebsparameter anhand der Geometrie des Musters gemessen wird.

2. Verfahren nach Anspruch 1, wobei die Schritte a) bis h) für einen oder mehrere, insbesondere jeden, Betriebsparameter aus einem mindestens zwei Betriebsparameter umfassenden Satz von Betriebsparametern durchgeführt werden.

3. Verfahren nach Anspruch 1 oder 2, wobei der Abstand zwischen der Rohdatenaufnahme und der synthetischen Rohdatenaufnahme in einer Metrik ermittelt wird, wobei identische Rohdatenaufnahmen den Abstand Null aufweisen.

4. Verfahren nach einem der vorhergehenden Ansprüche, wobei das Ändern des zumindest einen Betriebsparameters anhand eines Optimierungsalgorithmus erfolgt, welcher insbesondere ein auf nichtdifferenzierbare Probleme anwendbarer Algorithmus ist.

5. Verfahren nach Anspruch 4, wobei der Optimierungsalgorithmus ein evolutionärer Algorithmus, insbesondere ein genetischer Algorithmus ist und ein geringer Abstand eine hohe Fitness eines Satzes Betriebsparameter bedeutet.

6. Verfahren nach einem der vorhergehenden Ansprüche, wobei weitere Rohdatenaufnahmen des Kalibrierungsobjektes (KO) mittels des bildgebenden Sensors (BS) angefertigt werden, wobei die weiteren Rohdatenaufnahmen für jeweils unterschiedliche räumliche Positionen des bildgebenden Sensors (BS) zum Kalibrierungsobjekt (KO) angefertigt werden und die Schritte c) bis h) jeweils für die weiteren Rohdatenaufnahmen durchlaufen werden.

7. Verfahren nach einem der vorhergehenden Ansprüche, wobei eine weitere Rohdatenaufnahme eines weiteren Kalibrierungsobjektes (KO) mittels des bildgebenden Sensors (BS) angefertigt wird, wobei die Schritte b) bis h) für die weitere Rohdatenaufnahme durchlaufen werden.

8. Anordnung (10) zum Parametrieren einer Emulationslogik (EL), welche einen bildgebenden Sensor (BS) emuliert, aufweisend einen Prozessor (P) und eine Emulationslogik (EL), wobei
• der Prozessor (P) eingerichtet ist,
a) eine mittels des bildgebenden Sensors (BS) angefertigte Rohdatenaufnahme eines Kalibrierungsobjektes (KO) zu empfangen,
b) zumindest einen Betriebsparameter des bildgebenden Sensors (BS) anhand der Rohdatenaufnahme zu messen,
c) eine Emulationslogik (EL) mit dem zumindest einen Betriebsparameter zu parametrieren, und
• die Emulationslogik (EL) eingerichtet ist,
d) eine synthetische Rohdatenaufnahme eines digitalen Zwillings des Kalibrierungsobjektes (KO) anzufertigen, wobei
• der Prozessor (P) weiter eingerichtet ist,
e) einen Abstand zwischen der Rohdatenaufnahme und der synthetischen Rohdatenaufnahme zu ermitteln, und
f) falls der Abstand, einen vorgebbaren Schwellwert überschreitet:
• die Anordnung eingerichtet ist,
g) den zumindest einen Betriebsparameter zu ändern und
h) die Schritte c) bis h) mit dem geänderten zumindest einen Betriebsparameter wiederholt durchzuführen,
wobei das Kalibrierungsobjekt (KO) als ein Reflektor mit einer definierten Charakteristik ausgebildet ist, falls der bildgebende Sensor (BS) als ein Radarsensor, ein Lidarsensor oder ein Ultraschallsensor ausgebildet ist oder
wobei das Kalibrierungsobjekt (KO) als eine Tafel mit einem definierten geometrischen Muster ausgebildet ist, falls der bildgebende Sensor (BS) als eine Kamera ausgebildet ist, wobei der zumindest eine Betriebsparameter anhand der Geometrie des Musters gemessen wird.

9. Anordnung nach Anspruch 8, wobei die Emulationslogik (EL) Hardware aufweist, wobei die Hardware insbesondere als programmierbare Gatteranordnung ausgebildet ist.

10. Anordnung nach Anspruch 8 oder 9, wobei die Emulationslogik (EL) Software aufweist, die insbesondere auf dem Prozessor (P) oder auf einem weiteren Prozessor ausgeführt wird.

11. Aufbau (20) zum Parametrieren einer Emulationslogik (EL), welche einen bildgebenden Sensor (BS) emuliert, mit dem bildgebenden Sensor (BS), einem Kalibrierungsobjekt (KO) und einer Anordnung (10) nach einem der Ansprüche 8 bis 10.

12. Verwendung einer gemäß eines der Ansprüche 1 bis 7 parametrierten Emulationslogik (EL), welche einen bildgebenden Sensor (BS) emuliert, in einem Prüfaufbau eines Steuersystems (ECU) zur Ansteuerung eines Roboters und/oder eines zumindest teilautonomen Fahrzeuges, wobei in dem Prüfaufbau vorgesehen ist, von der Emulationslogik (EL) angefertigte synthetische Rohdaten in das Steuersystem (ECU) einzuspeisen.

13. Verwendung von synthetischen Rohdaten zum Trainieren eines neuronalen Netzes, insbesondere eines Klassifikators, wobei das neuronale Netz zur Integration in ein Steuersystem (ECU) zur Ansteuerung eines Roboters und/oder eines zumindest teilautonomen Fahrzeuges vorgesehen ist, wobei die synthetischen Rohdaten von einer gemäß eines der Ansprüche 1 bis 7 parametrierten Emulationslogik (EL), welche einen bildgebenden Sensor (BS) emuliert, angefertigt worden sind.
